# EUROPÄISCHE PATENTANMELDUNG

(11) **EP 1 785 745 A1**
(43) Veröffentlichungstag der Anmeldung: **16.05.2007**
(21) Anmeldenummer: 05024525.7
(22) Anmeldetag: 10.11.2005
(51) Int. Cl.: G01V 8/10

(54) **Verfahren und Bedieneinheit zum Konfigurieren und Überwachen einer Einrichtung mit funktionaler Sicherheit**

(71) Anmelder: Omron Electronics Manufacturing of Germany GmbH, 71154 Nufringen (DE)
(72) Erfinder: Bork, Harald, 78736 Epfendorf (DE); Betz, Jochen, Dr., 71263 Weil der Stadt (DE)
(74) Vertreter: Hössle Kudlek & Partner

(57) **Zusammenfassung**

Die vorliegende Erfindung betrifft ein Verfahren zum Konfigurieren eines Sicherheitssensors, wie beispielsweise einer Lichtschranke, mit anwendungsspezifisch einzustellenden Parametern, wobei eine mit Eingabemitteln ausgestattete Bedieneinheit vorgesehen wird, die unter automatischer Schnittstellen- und Sensorerkennung an den Sicherheitssensor angeschlossen wird, und mittels der Eingabemittel die anwendungsspezifischen Parameter eingestellt werden, wobei simultan und automatisch eine Rückmeldung der eingestellten Parameter auf einer Anzeigeeinheit (10) der Bedieneinheit visualisiert dargetellt wird.
Die vorliegende Erfindung betrifft ferner eine entsprechende Bedieneinheit und ein Verfahren zum Überwachen eines Sicherheitssensors mit anwendungsspezifisch einzustellenden Parametern.

## Beschreibung

### Gebiet der Erfindung

Die vorliegende Erfindung betrifft ein Verfahren und eine Bedieneinheit zum Konfigurieren, Kontrollieren und Überwachen der korrekten Funktion einer Einrichtung mit funktionaler Sicherheit, insbesondere eines Sicherheitssensors mit anwendungsspezifisch einzustellenden Parametern. Insbesondere betrifft die vorliegende Erfindung ein Verfahren zum Konfigurieren einer Sicherheitslichtschranke bzw. eines Sicherheitslichtgitters mit einer Mehrzahl von Lichtstrahlen und zum Kontrollieren und Überwachen der korrekten Installation und Funktion eines Sicherheitssensors bzw Sicherheitslichtgitters. Ferner bezieht sich die Erfindung auf ein Computerprogramm und ein Computerprogrammprodukt.

### Hintergrund der Erfindung

Sicherheitssensoren und andere Produkte mit funktionaler Sicherheit nach EN 61508 müssen sowohl den jeweiligen Anforderungen einer Anwendung, den Anforderungen seitens eines Kunden und den jeweils geltenden Normen und Richtlinien gerecht und dahingehend konfiguriert werden. Für berührungslos wirkende Schutzeinrichtungen zur Sicherheit von Maschinen, wie beispielsweise Sicherheitslichtgitter bzw. Sicherheitslichtschranken, sind die beim Konfigurieren einzustellenden Parameter kompliziert und sehr umfangreich. Um eine korrekte Konfiguration der einzustellenden Parameter eines zur Arbeitssicherheit eingesetzten Produktes zu garantieren bzw. zu gewährleisten, ist eine sichtbare bzw. erkennbare Rückmeldung bzw. ein Feedback der eingestellten Parameter notwendig, um somit eine falsche Konfiguration vermeiden zu können. Ein direktes bzw. unmittelbares Einstellen der Konfiguration am sicherheitsrelevanten Gerät und auch ein Einstellen der Konfiguration über ein tragbares Bediengerät ist dabei nicht sehr benutzerfreundlich und insbesondere die Rückmeldung bzw. das Feedback zum Überprüfen der Einstellung ist nicht gesichert. Daher birgt diese Art der Konfiguration die Gefahr einer Fehlparametrierung. Außerdem kann kein Nachweis der Konfigurationsdaten als Ausdruck oder Datensatz erstellt werden, was von Qualitätsmanagementseite wünschenswert ist.

Im Gebiet der industriellen Automatisierung ist ein Konfigurationsverfahren bekannt, wobei hier die Konfiguration und Parametrierung meist über eine projektbezogene objektorientierte Baumstruktur vollzogen wird. Dabei werden die Komponenten und Module ähnlich wie bei einer objektorientierten Programmierung in die Projekthierarchiestruktur gezogen und bearbeitet. Die Konfiguration und Einstellung der einzelnen Komponenten und Module muss durch einen Fachmann durchgeführt werden, der die Art der Konfiguration zum einen und zum anderen die Kenntnisse zur Lösung der sicherheitsrelevanten Applikation hat. Bei dieser Art der Konfiguration erfolgt keine benutzergeführte Steuerung des Benutzers durch eine zu Konfigurationszwecken genutzte Software. Das Vergessen von einzelnen Konfigurationsschritten kann zu einer Fehlfunktion der Sicherheitsanwendung führen. Zur Verwendung eines derartigen Verfahrens ist Sachkenntnis seitens des Anwenders erforderlich, um eine Konfiguration durchzuführen. Ferner ist eine zur Durchführung des Verfahrens einzusetzende Bedieneinheit bei Anschluss an ein entsprechendes Produkt, wie beispielsweise an einen Sicherheitssensor, an ein Sicherheitslichtgitter oder an ähnliche sicherheitsrelevante Einrichtungen, nicht in der Lage, eine automatische Sensorerkennung anzuzeigen bzw. vorzunehmen. Demnach muss seitens eines Anwenders jede Art von Einstellung in Bezug auf das anzuschließende Produkt an der Bedieneinheit manuell vorgenommen werden, nachdem die Komponenten des Produkts in der entsprechenden Software ebenfalls manuell hinzugefügt wurden. Ferner ist keine direkte Rückmeldung der realisierten bzw. umgesetzten Konfiguration des Produktes sichtbar, so dass ein Anwender nicht in der Lage ist, instantan nach Durchführung der Konfiguration die dadurch bewirkten Auswirkungen auf das Produkt, wie beispielsweise den Sicherheitssensor, zu kontrollieren bzw. zu überprüfen.

Wie bereits erwähnt, mangelt es den bisher bekannten Verfahren an Benutzerfreundlichkeit und ferner daran, dass keine direkte Rückmeldung bzw. kein direktes Feedback der aktuell durchgeführten Einstellungen und der Funktion des Sensors erfolgen kann. Insbesondere ist es dabei nicht möglich, bei Sicherheitslichtgittern die individuellen Strahlen des Lichtgitters zu visualisieren, um deren Intensität kontrollieren und entsprechend ändern bzw. einstellen zu können. Ein unmittelbares Feedback ist nicht gewährleistet.

### Zusammenfassung der Erfindung

Vor dem Hintergrund des beschriebenen Standes der Technik schlägt nun die vorliegende Erfindung ein Verfahren zum Konfigurieren eines Sicherheitssensors mit den Merkmalen von Patentanspruch 1, eine Bedieneinheit zum Konfigurieren eines Sicherheitssensors mit den Merkmalen gemäß Patentanspruch 13 und ein Computerprogramm mit den Merkmalen von Patentanspruch 27 sowie ein Computerprogrammprodukt mit den Merkmalen von Patentanspruch 28 vor. Ferner wird ein Verfahren zum Überwachen eines Sicherheitssensors mit den Merkmalen von Patentanspruch 12 bereitgestellt.

Gemäß Patentanspruch 1 wird ein Verfahren zum Konfigurieren eines Sicherheitssensors mit anwendungsspezifisch einzustellenden Parametern bereitgestellt, wobei eine mit Eingabemitteln ausgestattete Bedieneinheit vorgesehen wird, die unter automatischer Schnittstellen- und Sensorerkennung an den Sicherheitssensor angeschlossen wird, und mittels der Eingabemittel die anwendungsspezifischen Parameter eingestellt werden, wobei simultan und automatisch eine Rückmeldung bzw. ein Feedback der eingestellten Parameter auf einer Anzeigeeinheit der Bedieneinheit visualisiert dargestellt wird.

Das erfindungsgemäße Verfahren bietet demnach eine automatische Schnittstellenerkennung bei Kopplung der Bedieneinheit und des Sicherheitssensors. Die Bedieneinheit kann dabei eine Recheneinheit, wie bspw. ein Personal Computer (PC), oder eine tragbare Recheneinheit, wie beispielsweise ein Laptop, sein. Ferner kann es sich dabei auch um einen handelsüblichen PDA, eine Spielkonsole mit Controllerauswertung, eine industrielle Steuerung mit Touchscreen, so wie sie z.B. von der Firma OMRON angeboten werden, oder ein Handy mit programmierbarem Interface, so wie sie handelsüblich angeboten werden, handeln. Neben verdrahteten Verbindungen via USB oder RS485 oder ähnlichen seriellen Kommunikationssystemen sind auch andere drahtlose Kommunikationsverbindungen (wireless) denkbar, wie z.B. InfraRot-Kommunikation (IrDA), Funkverbindungen (z.B. Bluetooth) oder elektromagnetisch, induktive Verbindungen. Die Eingabemittel können durch eine Tastatur bereitgestellt werden oder aber in Form eines sogenannten "Touchscreens" realisiert werden. Aufgrund der automatischen Schnittstellenerkennung ist ein Anwender nicht genötigt, manuell bzw. selbsttätig eine Datenverbindung zwischen der Bedieneinheit und dem Sicherheitssensor herzustellen. Ferner gewährleistet das erfindungsgemäße Verfahren eine Sensorerkennung, so dass die Bedieneinheit bei Anschluss an den entsprechenden Sensor automatisch Kenntnis hat, um welche Art von angeschlossenem Gerät bzw. Sensor es sich handelt, ohne dass der Anwender selbst dies in irgendeiner Form, wie beispielsweise manuell, eingeben müsste.

Dadurch ist es möglich, dass eine die Einstellung unterstützende Software nur die Konfigurationsparameter und Einstellungsmöglichkeiten zur Verfügung stellt, die vom jeweilig angeschlossenem Produkt unterstützt werden. Funktionen, die vom entsprechenden Produkt nicht zur Verfügung stehen, werden automatisch von der Software unterdrückt, so dass der Benutzter diese Funktionen nicht sieht. Das trägt deutlich zur Benutzerfreundlichkeit der Software und zur Fehlerreduzierung bei.

In einer Ausführungsform des erfindungsgemäßen Verfahrens wird als Sicherheitssensor eine Sicherheitslichtschranke bzw. ein Sicherheitslichtgitter mit einer Mehrzahl von Lichtstrahlen mit anwendungsspezifisch einzustellender Lichtintensität eines Senders, mit einer anwendungsspezifisch einzustellenden Verstärkung an einem Empfänger und/oder mit einer anwendungsspezifisch einzustellenden Schaltschwelle des jeweiligen Empfängers verwendet. Wird nunmehr der Sicherheitssensor bzw. das Sicherheitslichtgitter an die Bedieneinheit angeschlossen, so kann ein Anwender die Lichtintensität jedes einzelnen Lichtstrahls des Senders in Echtzeit auf der Anzeigeeinheit der Bedieneinheit erkennen. Ebenso kann ein Anwender die Verstärkung der Signale am Empfänger und die Schaltschwelle am Empfänger individuell einstellen.

Denkbar ist es, die Lichtintensität jedes einzelnen Lichtstrahls des Lichtgitters durch ein Balkendiagramm dynamisch in Echtzeit zu visualisieren, wobei ein Balken des Balkendiagramms die Lichtintensität genau eines der Lichtstrahlen des Lichtes am Empfänger wiederspiegelt bzw. abbildet. Ein Anwender ist nunmehr in der Lage, das Einrichten und Ausrichten des Lichtgitterpaares in eine optimale Position durchzuführen. Sobald alle Strahlen volle Intensität am Empfänger zeigen, ist das Lichtgitter optimal ausgerichtet und kann fixiert werden. Der Anwender kann ausserdem über die Eingabemittel der Bedieneinheit die Einstellungen der Lichtstrahlen beispielsweise hinsichtlich ihrer jeweiligen Lichtintensität ändern, was instantan mit Hilfe des Balkendiagramms auf der Anzeigeeinheit der Bedieneinheit visualisiert dargestellt wird. Neben der Lichtintensität ist es denkbar, als weiteren einzustellenden Parameter beispielsweise auch eine Schaltschwelle für ein Schalten am Empfänger zu wählen. Mittels der Visualisierung der einzustellenden bzw. zu ändernden Parameter ist es möglich, die Sicherheitslichtschranke bzw. das Sicherheitslichtgitter in einer spezifischen Anwendung bzw. in einer spezifischen Installation schnell und einfach zu konfigurieren. Es kann dabei ein auf den jeweiligen Einsatz des Sicherheitslichtgitters optimierter Abgleich erfolgen.

In einer weiteren Ausführungsform des erfindungsgemäßen Verfahrens ist es ferner vorgesehen, ein oder mehrere Lichtstrahlen des Sicherheitsgitters mittels der Eingabemittel der Bedieneinheit definiert auszublenden ("blanking"). Dies kann dann relevant sein, wenn beispielsweise ein bestimmter Körper mit bestimmten Dimensionen bewusst ungehindert durch das Sicherheitslichtgitter bewegt werden soll, ohne die Apparatur, deren ungehinderter Zugang durch das Sicherheitslichtgitter verhindert werden soll, automatisch abzuschalten. Das Ausblenden der Lichtstrahlen des Sicherheitslichtgitters wird mittels des erfindungsgemäßen Verfahrens ebenfalls über die Eingabemittel der Bedieneinheit definiert vorgenommen und automatisch instantan auf der Anzeigeeinheit der Bedieneinheit automatisch visualisiert dargestellt.

In einer weiteren denkbaren Ausführungsform des erfindungsgemäßen Verfahrens werden die eingestellten Parameter des Sicherheitssensors modifiziert gegenüber ihrer ursprünglichen Einstellung, wobei die Modifikation instantan auf der Anzeigeeinheit der Bedieneinheit dargestellt wird. Dadurch ist es möglich, eine kontrollierte Modifikation der einzustellenden Parametern vorzunehmen, was auch eine sehr geringfügige bzw. sensible Modifikation des Sicherheitssensors bzw. der Parameter des Sicherheitssensors möglich macht.

Dabei ist es denkbar, dass die eingestellten Parameter des Sicherheitssensors nur autorisiert modifiziert werden. Eine derartige Autorisierung kann durch ein vorgegebenes Passwort realisiert bzw. definiert werden. Das bedeutet, dass eine Einstellung der Parameter zunächst passwortgesichert ist und eine Änderung der Einstellungen nur durch Eingabe des spezifischen Passwortes möglich wird. Dadurch wird eine willkürliche Änderung eingestellter Parameter durch einen unbefugten Anwender verhindert.

In einer weiteren möglichen Ausführungsform des erfindungsgemäßen Verfahrens werden die eingestellten Parameter automatisch zu vorgebbaren Zeitpunkten abgespeichert.

Die vorgebbaren Zeitpunkte können beispielsweise durch einen Anwender manuell eingegeben werden. Beispielsweise können bei jeder Änderung die zuvor eingestellten Parameter automatisch hinterlegt werden.

Ferner ist es jedoch auch denkbar, dass die eingestellten Parameter periodisch abgespeichert werden, wobei auch die Periode mittels der Eingabemittel seitens eines Anwenders eingegeben werden kann. Dadurch können Anforderungen eines Qualitätsmanagements leicht erfüllt werden.

Eine weitere Ausführungsform des erfindungsgemäßen Verfahrens sieht vor, dass eine Fehlermeldung ausgegeben wird, sobald der Sicherheitssensor von der Bedieneinheit entkoppelt ist.

Weiterhin ist es möglich, dass die Bedieneinheit über einen Wandler an den Sicherheitssensor angeschlossen wird. Bei dem Wandler kann es sich dabei um einen USB-RS 485-Wandler handeln, der beispielsweise von der Firma Omron Electronics angeboten wird. Mittels eines derartigen Wandlers werden Daten zwischen dem Sicherheitssensor und der Bedieneinheit, beispielsweise einem PC, übertragen.

Ferner ist es möglich, dass mittels des erfindungsgemäßen Verfahrens gleichzeitig mehrere Sicherheitssensoren parallel und unabhängig voneinander konfiguriert werden können. Dabei können die eingestellten Parameter jedes einzelnen Sicherheitssensors abgespeichert werden, um eine spätere Qualitätsüberprüfung bzw. Lenkbarkeit gewährleisten zu können. Ferner ist es denkbar, die hinterlegten Parameter zu nutzen, um eine systematische Rückverfolgung von Änderungen vorzunehmen, um dadurch beispielsweise eine Fehlersuche bzw. eine Fehlerbeseitigung durchführen zu können.

Ferner umfasst die vorliegende Erfindung eine Bedieneinheit zum Konfigurieren mindestens eines Sicherheitssensors mit anwendungsspezifisch einzustellenden Parametern, wobei die Bedieneinheit Anschlussmittel zum Anschließen der Bedieneinheit an den mindestens einen Sicherheitssensor, Detektormittel zur automatischen Schnittstellen- und Sensorerkennung bei Anschluss der Bedieneinheit an den Sicherheitssensor, Eingabemittel zum Einstellen und Ändern der anwendungsspezifischen Parameter und eine Anzeigeeinheit umfasst, wobei simultan und automatisch nach Einstellen und/oder Ändern der Parameter eine Rückmeldung bzw. ein Feedback der eingestellten bzw. geänderten Parameter auf der Anzeigeeinheit der Bedieneinheit visualisiert dargestellt werden kann.

Es ist möglich, die Bedieneinheit zum Konfigurieren einer Sicherheitslichtschranke bzw. eines Sicherheitslichtgitters mit einer Mehrzahl von Lichtstrahlen mit anwendungsspezifisch einzustellender Lichtintensität zu verwenden. Neben der Lichtintensität ist es auch denkbar, dass empfängerseitig eine Verstärkung und/oder eine Schaltschwelle eingestellt werden. Unter der Schaltschwelle ist der Punkt zu verstehen, an dem der Lichtstrahl als "unterbrochen" gilt.

In einer Ausführungsform der Bedieneinheit kann auf der Anzeigeeinheit der Bedieneinheit die Lichtintensität für jeden Lichtstrahl des Sicherheitslichtgitters durch ein Balkendiagramm dynamisch in Echtzeit visualisiert dargestellt werden, wobei dabei ein Balken des Balkendiagramms die Lichtintensität genau eines der Lichtstrahlen abbildet. Bei der Anzeigeeinheit kann es sich dabei um einen Bildschirm bzw. ein Display oder eine LCD-Anzeige handeln.

Ferner ist es denkbar, mittels der Eingabemittel der Bedieneinheit ein oder mehrere Lichtstrahlen des Sicherheitslichtgitters definiert auszublenden. Ein definiertes selektives Ausblenden von Lichtstrahlen eines Sicherheitslichtgitters kann beispielsweise von Nöten sein, wenn ein ungehinderter Zugang zu einer durch das Sicherheitslichtgitter abgeschirmten Apparatur für ein bestimmtes Objekt ermöglicht werden soll.

In einer anderen Ausführungsform der Bedieneinheit können mittels der Eingabemittel die eingestellten Parameter kontrolliert modifiziert werden, was bedeutet, dass die Modifikation instantan auf der Anzeigeeinheit der Bedieneinheit visualisiert dargestellt werden kann. Das bedeutet, dass jede Modifikation gesteuert vorgenommen wird und jegliche Konsequenz der durchgeführten Modifikation sofort erkennbar wird.

In einer weiteren Ausführungsform der Bedieneinheit kann eine Modifikation der eingestellten Parameter des Sicherheitssensors über die Eingabemittel der Bedieneinheit nur autorisiert erfolgen. Die Autorisierung ist dabei durch ein vorgegebenes Passwort realisiert bzw. definiert. Das bedeutet, dass ein Nutzer nur durch Eingabe eines ihm bekannten und spezifischen Passwortes eine Modifikation der eingestellten Parameter des Sicherheitssensors vornehmen kann. Dadurch wird jeder unbefugte Einfluss auf die eingestellten Parameter des Sicherheitssensors unterbunden.

Ferner ist es denkbar, dass die erfindungsgemäße Bedieneinheit eine Speichereinheit umfasst, mittels derer die eingestellten Parameter automatisch zu vorgebbaren Zeitpunkten abgespeichert und wiederaufrufbar hinterlegt werden können. Dabei ist es denkbar, durch die Speichereinheit die eingestellten Parameter periodisch abzuspeichern und die Periode mittels der Eingabemittel vorzugeben. Es können aber auch andere Zeitpunkte vorgegeben werden, wie beispielsweise immer, wenn eine Modifikation vorgenommen werden soll.

Dabei ist es denkbar, dass die Speichereinheit eine Art Historie der eingestellten Parameter hinterlegt, wodurch ein Rückverfolgen der vorgenommenen Modifikationen der Parameter möglich ist. Eine derart hinterlegte Historie kann zur späteren Qualitätskontrolle oder zur Fehlersuche im Falle eines aufgetretenen Fehlers hilfreich sein.

Die Speichereinheit ist auch zur Speicherung eines Passworts und anderen Zugangsdaten einsetzbar. Dadurch lässt sich der Zugriff auf Konfigurationsdaten und andere sicherheitsrelevante und vertrauliche Daten steuern und kontrollieren.

In einer anderen Ausführungsform der erfindungsgemäß vorgesehenen Bedieneinheit umfasst die Bedieneinheit ferner eine Detektoreinheit, über welche eine Fehlermeldung ausgegeben werden kann, sobald der Sicherheitssensor von der Bedieneinheit entkoppelt ist. Dadurch wird sofort kenntlich, dass der Sicherheitssensor keiner Kontrolle mehr unterliegt, was eine sofortige Reaktion darauf möglich macht.

In einer weiteren Ausführungsform der erfindungsgemäßen Bedieneinheit ist die Bedieneinheit dazu geeignet, auf der Anzeigeeinheit eine Art Framework, d.h. eine Benutzeroberfläche mit verschiedenen Fenstern anzuzeigen, in dem jedem Fenster eine bestimmte Funktion und Aufgabe zugewiesen ist. Dabei kann mindestens ein erstes, ein zweites und ein drittes Fenster angezeigt werden. Das erste Fenster kann bspw. einen aktuellen Status der Parameter des Sicherheitssensors darstellen und zur Überwachung herangezogen werden ("readonly"). Das zweite Fenster stellt bspw. einen über die Eingabemittel eingebbaren einzustellenden Status der Parameter des Sicherheitssensors dar. Das dritte Fenster visualisiert die Lichtstrahlen des Sicherheitssensors oder des Lichtgitters in Echtzeitdarstellung. Dadurch ist der aktuelle Lichtstrahlenstatus dargestellt. Diese Funktion ist zur Überwachung und bei Installation des Lichtgitters besonders hilfreich. Es lassen sich dadurch Fehler bei der Installation vermeiden.

Dabei ist es denkbar, dass das erste Fenster ausschließlich lesbar und das zweite Fenster lesbar und mittels der Eingabemittel, insbesondere autorisiert, spezifischen Eingaben zugänglich ist. Das bedeutet, dass die über die Eingabemittel vornehmbaren Eingaben im zweiten Fenster bei Übergabe an den Sensor automatisch in dem ersten Fenster des Frameworks dargestellt werden. Eine derartige Aktivierung von in dem zweiten Fenster erkennbaren Eingaben kann dabei beispielsweise im Falle, dass die Eingabemittel einer Tastatur entsprechen, durch Drücken einer oder mehrerer Tasten erfolgen. Die Eingabemittel können allerdings auch in Form eines sogenannten Touchscreens realisiert werden, was bedeutet, dass durch Berührung entsprechender Stellen im zweiten Fenster des Frameworks Eingaben vorgenommen und beispielsweise auch aktiviert werden können.

Ferner betrifft die vorliegende Erfindung ein Verfahren zum Überwachen eines Sicherheitssensors mit anwendungsspezifisch einzustellenden Parametern, wobei eine mit Eingabemitteln ausgestattete Bedieneinheit vorgesehen wird, die unter automatischer Schnittstellen- und Sensorerkennung an den Sicherheitssensor angeschlossen wird, wobei simultan und automatisch eine Rückmeldung eingestellter Parameter und Lichtintensitäten an einem Empfänger auf einer Anzeigeeinheit der Bedieneinheit visualisiert dargestellt wird.

Die erfindungsgemäße Bedieneinheit kann auch dazu eingerichtet sein, sowohl ein erfindungsgemäßes Verfahren zum Überwachen wie auch ein erfindungsgemäßes Verfahren zum Konfigurieren eines Sicherheitssensors ausführen zu können.

Darüber hinaus umfasst die vorliegende Erfindung ein Computerprogramm mit Programmcodemitteln, um alle Schritte eines erfindungsgemäßen Verfahrens durchzuführen, wenn das Computerprogramm auf einem Computer oder einer entsprechenden Recheneinheit, insbesondere einer erfindungsgemäßen Bedieneinheit durchgeführt wird. Diese kann bspw. in Form eines Bedienterminals mit Touchscreen, so wie es in der Automatisierungstechnik angeboten und auch von der Firma OMRON vertrieben wird, realisiert sein.

Die vorliegende Erfindung betrifft auch ein Computerprogrammprodukt mit Programmcodemitteln, die auf einem computerlesbaren Datenträger gespeichert sind, um alle Schritte eines erfindungsgemäßen Verfahrens durchzuführen, wenn das Computerprogramm auf einem Computer oder einer entsprechenden Recheneinheit, insbesondere einer erfindungsgemäßen Bedieneinheit durchgeführt wird.

Die Vorteile der vorliegenden Erfindung sind insbesondere darin zu sehen, dass zum einen eine automatische Schnittstellenerkennung beim Anschluss der Bedieneinheit an den Sicherheitssensor gegeben ist. Ferner ist eine automatische Sensorerkennung gewährleistet. Dadurch muss ein Anwender nicht tätig werden, um manuell eine Datenkommunikation zwischen Bedieneinheit und Sicherheitssensor möglich zu machen. Ein weiterer Vorteil ist darin zu sehen, dass beispielsweise im Falle eines Sicherheitslichtgitters in einer möglichen Ausführungsform des erfindungsgemäßen Verfahrens bzw. der erfindungsgemäßen Bedieneinheit die Lichtintensität der Lichtstrahlen in Echtzeit für jeden einzelnen Lichtstrahl visualisiert und beispielsweise in Form eines Balkendiagramms illustriert werden kann, damit deutlich beurteilt werden kann, ob das Sicherheitslichtgitter korrekt ausgerichtet ist. Bei falscher Ausrichtung des Lichtgitters treffen nicht alle Strahlen korrekt in einen jeweiligen Empfänger. Somit wird kein Vollausschlag der Balken dargestellt und der Anwender kann sofort erkennen, in welchem Bereich des Lichtgitters eine Optimierung der Ausrichtung des Lichtgitters nötig ist. In der möglichen Ausgestaltung des in einer Ausführungsform der erfindungsgemäßen Bedieneinheit vorgesehenen Frameworks in Form von drei separaten Fenstern mit jeweils speziellen Funktionalitäten ist auch eine besondere Benutzerfreundlichkeit zu erkennen. Die Struktur der drei verschiedenen Fenster macht es für einen Anwender übersichtlich, was gegeben ist, da das erste Fenster die eingestellten aktuellen Parameter wiedergibt, was eingestellt werden kann, was in dem zweiten Fenster vorgenommen bzw. angezeigt wird, und wie sich eine vorgenommene Einstellung aktiv auswirkt, was durch das dritte Fenster wiedergegeben wird. Ein weiterer Vorteil ist in einem in einer möglichen Ausführungsform vorgesehenen beispielsweise durch ein Passwort realisierten Schreibschutz bzw. Eingabenschutz zu sehen, wodurch die Parameter nur autorisiert eingestellt bzw. verändert werden können, wodurch ein unautorisierter unbefugter Zugriff oder eine Misskonfiguration bzw. Einstellungsmodifikation vermieden werden kann. Auch die mögliche unmittelbare Sichtbarmachung bzw. Fehlermeldung im Falle, dass die Kommunikation zwischen Sicherheitssensor und Bedieneinheit unterbrochen ist, macht das erfindungsgemäße Verfahren benutzerfreundlich. Eine mögliche USB basierte Verbindung des Sicherheitssensors zu der Bedieneinheit gewährleistet eine Ankopplung an jede Art von PC bzw. Laptop. Ferner können gemäß einer Ausführungsform des erfindungsgemäßen Verfahrens bzw. mittels einer Ausführungsform der erfindungsgemäßen Bedieneinheit mehrere unterschiedliche Sicherheitssensoren parallel und unabhängig voneinander konfiguriert werden. Die mögliche Abspeicherung von eingestellten Parametern zum Sicherheits- bzw. Qualitätsabgleich, Rückverfolgung und Fehlererkennung ist ebenfalls ein Vorteil der vorliegenden Erfindung.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurzbeschreibung der Zeichnung

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt ein Beispiel eines Sicherheitssensors, der mittels einer Ausführungsform des erfindungsgemäßen Verfahrens konfiguriert werden kann;
- Figur 2: zeigt einen Ausschnitt einer visualisierten Darstellung einer Anzeigeeinheit einer Ausführungsform der erfindungsgemäßen Bedieneinheit; und
- Figur 3: zeigt ein anderes Beispiel eines Sicherheitssensors mit einer sog. "Muting"-Funktion, wie sie durch eine andere Ausführungsform der erfindungsgemäßen Bedieneinheit konfiguriert werden kann.

### Detaillierte Beschreibung der Zeichnung

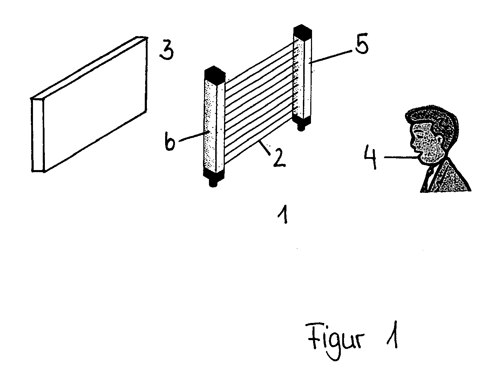

Figur 1 zeigt einen Sicherheitssensor 1, der hier einer Sicherheitslichtschranke bzw. einem Sicherheitslichtgitter mit einer Mehrzahl von parallel laufenden Lichtstrahlen 2 entspricht. Die Sicherheitslichtschranke 1 soll dabei eine Apparatur 3 gegen unbefugten bzw. unkontrollierten Zugriff abschirmen. Durch die Sicherheitslichtschranke 1 wird ein Zugriff eines Anwenders 4 auf die Apparatur 3 von Seiten der Sicherheitslichtschranke 1 verhindert. Die Lichtstrahlen 2 verlaufen hier parallel zwischen zwei sich gegenüberstehenden vertikal verlaufenden Balken 5 und 6, wobei der Balken 5 beispielsweise die jeweiligen Lichtstrahlenquellen umfasst, während der Balken 6 die entsprechenden jeweiligen Lichtstrahlensenken beinhaltet. Je nach Anwendung muss die Lichtintensität der einzelnen Lichtstrahlen am Empfänger sowie auch beispielsweise spezielle Funktionen, wie bspw. "Muting", "Blanking", "Restart Interlock", "Partial Blanking", "Moving Partial Blanking", etc. präzise eingestellt bzw. konfiguriert werden. Diese Konfigurierung der Lichtstrahlen erfolgt nun mittels einer erfindungsgemäßen hier nicht dargestellten Bedieneinheit. In der hier gezeigten Konstellation ist es ferner möglich, dass einzelne Lichtstrahlen 2 bewusst für einen befugten Zugang beispielsweise eines bestimmten Produktes, welches während Betriebs der Apparatur 3 zur Apparatur 3 gelangen muss, ausgeblendet werden. Auch diese gezielte Ausblendung kann mittels der Bedieneinheit zielgerecht eingestellt werden.

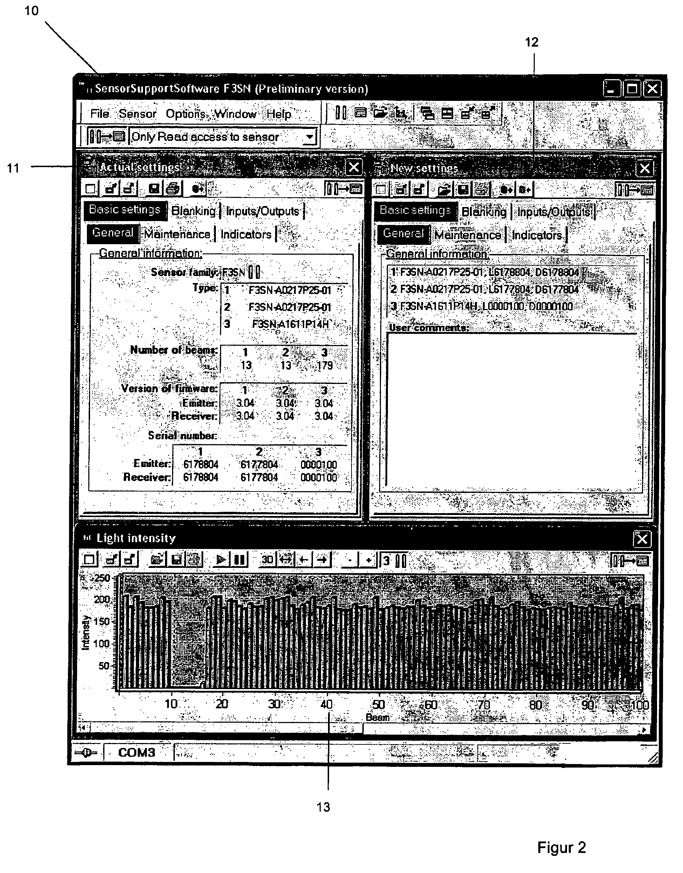

Figur 2 zeigt nunmehr einen Ausschnitt einer Anzeigeeinheit 10 einer erfindungsgemäßen Bedieneinheit, welche an einen Sicherheitssensor, wie beispielsweise an ein Sicherheitslichtgitter, wie es in Figur 1 gezeigt ist, angeschlossen wird. Auf der Anzeigeeinheit 10 ist eine Art Framework angezeigt mit einem ersten Fenster 11, einem zweiten Fenster 12 und einem dritten Fenster 13. Das erste Fenster 11 zeigt dabei einen aktuellen Status bzw. aktuelle Einstellungen ("Actual settings") von das Sicherheitslichtgitter charakterisierenden Parametern, wie beispielsweise die Lichtintensität der Lichtstrahlen des Sicherheitslichtgitters. Das zweite Fenster 12 zeigt einen über die Eingabemittel eingebbaren einzustellenden Status der Parameter des Sicherheitssensors ("New settings"). Das dritte Fenster 13 gibt in visueller Form die eingestellten Parameter, wie beispielsweise die Lichtintensität der einzelnen Lichtstrahlen wieder. Das Fenster 11 zeigt beispielsweise eine Grundeinstellung des Sicherheitslichtgitters. Das Fenster 12 zeigt die Einstellungen an, welche über die Eingabemittel der Bedieneinheit eingestellt bzw. geändert werden. Das Fenster 13 gibt hier beispielsweise in Form eines Balkendiagramms die Lichtintensität ("Light itensity") der einzelnen Lichtstrahlen des Sicherheitslichtgitters wieder. Sobald eine Änderung gegenüber den aktuellen Einstellungen erfolgt, wird dies in dem Fenster 13 in dem entsprechenden Diagramm simultan wiedergegeben. Dadurch ist es möglich, eine sofortige Kontrolle über vorgenommene Änderungen zu haben, wodurch eine sehr präzise und kontrollierte Konfiguration des Sicherheitslichtgitters erfolgen kann.

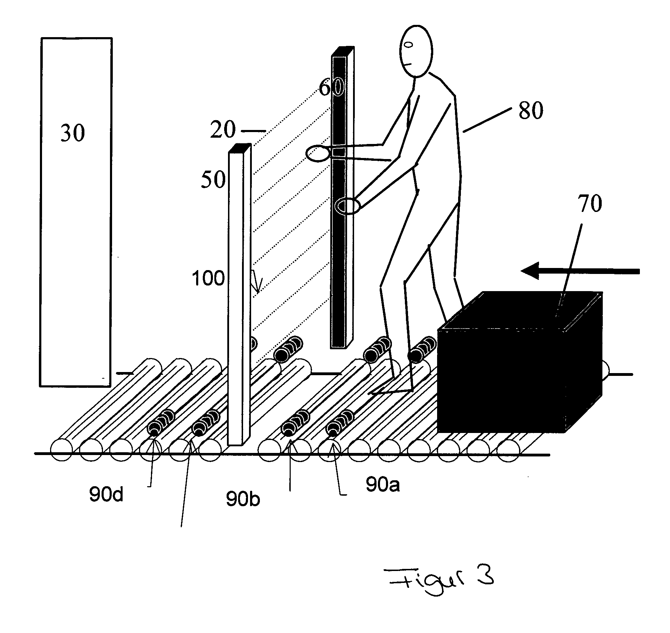

Figur 3 zeigt einen Sicherheitssensor 100, der hier einer Sicherheitslichtschranke bzw. einem Sicherheitslichtgitter mit einer Mehrzahl von parallel laufenden Lichtstrahlen 20 entspricht. Die Sicherheitslichtschranke 100 soll dabei wiederum eine Apparatur 30 gegen unbefugten bzw. unkontrollierten Zugriff abschirmen. Durch die Sicherheitslichtschranke 100 wird ein Zugriff eines Anwenders 80 auf die Apparatur 30 von Seiten der Sicherheitslichtschranke 100 verhindert. Die Lichtstrahlen 20 verlaufen hier parallel zwischen zwei sich gegenüberstehenden vertikal verlaufenden Balken 50 und 60, wobei der Balken 50 beispielsweise die jeweiligen Lichtstrahlenquellen umfasst, während der Balken 60 die entsprechenden jeweiligen Lichtstrahlensenken beinhaltet. In der hier gezeigten Konstellation ist eine sogenannte "Muting"-Funktionalität dargestellt, deren Konfiguration mittels einer erfindungsgemäßen hier nicht dargestellten Bedieneinheit vorgenommen werden kann. Eine derartige Funktionalität sieht vor, dass bestimmte vordefinierbare Lichtstrahlen für bestimmte Gegenstände 70 gezielt ausgeblendet werden, damit diese Gegenstände 70 ungehindert zu der Apparatur 30 gebracht werden können, während gleichzeitig diese Lichtstrahlen für andere Objekte, insbesondere für Personen 80 nicht ausgeblendet werden, damit eine Person 80 vor einem Zugang zu der Apparatur 30 gesichert ist. Zur Realisierung einer derartigen Funktionalität sind vor und hinter dem Sicherheitssensor 100 jeweils zwei definiert beabstandete Paare "Muting"-Sensoren 90 vorgesehen. Die Sensoren eines Paars sind jeweils gegenüberliegend zueinander in einem zum Durchgang eines Gegenstands geeigneten Abstands angeordnet. Der Abstand der Sensoren eines Paars kann dabei dem Abstand der zwei sich gegenüberstehenden vertikal verlaufenden Balken 50 und 60 des Sicherheitssensors 100 entsprechen. Die Sensoren sind dabei so eingestellt, dass, wenn ein Gegenstand 70, der Zugang zur Apparatur 30 haben soll, sich dem Sicherheitssensor 100 nähert, einige Strahlen gezielt ausgeblendet werden, so dass der Gegenstand 70 passieren kann. Passiert bzw. erreicht der Gegenstand 70 zu einem Zeitpunkt t1 das erste Paar Sensoren 90a und zu einem Zeitpunkt t2 das zweite Paar Sensoren 90b, so können über die sich daraus ergebende Zeitdifferenz t1-t2 die Sensorenpaare 90a und 90b so eingestellt werden, dass sie ein Ausblenden vordefinierter Lichtstrahlen des Sicherheitssensors 100 initiieren. Die Sensorenpaare 90c und 90d, die auf der der Apparatur 30 zugewandten Seite des Sicherheitssensors 100 angeordnet sind, bewirken entsprechend ein Wieder-Einblenden der zuvor ausgeblendeten Lichtstrahlen, wenn der Gegenstand 70 die Sensorpaare 90c und 90d passiert. Da ein Mensch 80 sich mit einer anderen Geschwindigkeit dem Sicherheitssensor 100 nähert und dabei die Sensorpaare 90a und 90b nacheinander nicht in einem einstellbaren Zeitabstand tl-t2 passiert, erfolgt bei entsprechender Konfiguration der Sensorenpaare 90a und 90b kein Ausblenden von Lichtstrahlen, so dass der Sicherheitssensor 100 für einen Menschen 80 weiterhin seine Sicherheitsfunktion erfüllt und diesem einen ungehinderten Zugang verwehrt. Da die Sensoren 90 sehr dezidiert und genau eingestellt werden müssen, war deren Konfiguration bislang sehr mühsam. Mit Hilfe einer erfindungsgemäßen Bedieneinheit kann nunmehr eine Konfiguration derartiger Sensoren auch über die seitens der Bedieneinheit bereitgestellte Anzeigeeinheit sehr schnell, einfach und insbesondere in Echtzeit erfolgen. Dazu können auf der Anzeigeeinheit gesonderte Funktionen und Einstellmöglichkeiten angezeigt werden, mit deren Hilfe ein Nutzer die Einstellungen vornehmen kann.

## Patentansprüche

1. Verfahren zum Konfigurieren eines Sicherheitssensors (1,100) mit anwendungsspezifisch einzustellenden Parametern, wobei eine mit Eingabemitteln ausgestattete Bedieneinheit vorgesehen wird, die unter automatischer Schnittstellen- und Sensorerkennung an den Sicherheitssensor (1,100) angeschlossen wird, und mittels der Eingabemittel die anwendungsspezifischen Parameter eingestellt werden, wobei simultan und automatisch eine Rückmeldung der eingestellten Parameter auf einer Anzeigeeinheit (10) der Bedieneinheit visualisiert dargestellt wird.

2. Verfahren nach Anspruch 1, wobei als Sicherheitssensor (1,100) eine Sicherheitslichtschranke bzw. ein Sicherheitslichtgitter mit einer Mehrzahl von Lichtstrahlen mit anwendungsspezifisch einzustellender Lichtintensität eines Senders (5,50), mit einer anwendungsspezifisch einzustellenden Verstärkung an einem Empfänger (6,60) und/oder mit einer anwendungsspezifisch einzustellenden Schaltschwelle am Empfänger (6,60) verwendet wird.

3. Verfahren nach Anspruch 2, wobei die Lichtintensität für jeden Lichtstrahl des Sicherheitsgitters durch ein Balkendiagramm dynamisch in Echtzeit visualisiert dargestellt wird, wobei ein Balken des Balkendiagramms die Lichtintensität genau eines Lichtstrahls abbildet.

4. Verfahren nach Anspruch 2 oder 3, wobei ein oder mehrere Lichtstrahlen des Sicherheitsgitters mittels der Eingabemittel der Bedieneinheit definiert ausgeblendet werden.

5. Verfahren nach einem der vorhergehenden Ansprüche, wobei die eingestellten Parameter modifiziert werden und die Modifikation instantan auf der Anzeigeeinheit (10) der Bedieneinheit visualisiert dargestellt wird.

6. Verfahren nach Anspruch 5, wobei die eingestellten Parameter nur autorisiert modifiziert werden.

7. Verfahren nach Anspruch 6, wobei die Autorisierung durch ein vorgegebenes Passwort realisiert bzw. definiert wird.

8. Verfahren nach einem der vorhergehenden Ansprüche, wobei die eingestellten Parameter automatisch zu vorgebbaren Zeitpunkten abgespeichert werden.

9. Verfahren nach Anspruch 8, wobei die eingestellten Parameter periodisch abgespeichert werden, wobei die Periode mittels der Eingabemittel eingegeben wird.

10. Verfahren nach einem der vorhergehenden Ansprüche, wobei eine Fehlermeldung ausgegeben wird, sobald der Sicherheitssensor (1,100) von der Bedieneinheit entkoppelt ist.

11. Verfahren nach einem der vorhergehenden Ansprüche, wobei die Bedieneinheit über einen Wandler an den Sicherheitssensor (1,100) angeschlossen wird.

12. Verfahren zum Überwachen eines Sicherheitssensors (1,100) mit anwendungsspezifisch einzustellenden Parametern, wobei eine mit Eingabemitteln ausgestattete Bedieneinheit vorgesehen wird, die unter automatischer Schnittstellen- und Sensorerkennung an den Sicherheitssensor angeschlossen wird, wobei simultan und automatisch eine Rückmeldung eingestellter Parameter und Lichtintensitäten an einem Empfänger auf einer Anzeigeeinheit der Bedieneinheit visualisiert dargestellt wird.

13. Bedieneinheit zum Konfigurieren mindestens eines Sicherheitssensors (1,100) mit anwendungsspezifisch einzustellenden Parametern, wobei die Bedieneinheit Anschlussmittel zum Anschließen der Bedieneinheit an den mindestens einen Sicherheitssensor (1,100), Detektormittel zum automatischen Schnittstellen- und Sensorerkennen bei Anschluss der Bedieneinheit an den Sicherheitssensor, Eingabemittel zum Einstellen und Ändern der anwendungsspezifischen Parameter und eine Anzeigeeinheit (10) umfasst, wobei simultan und automatisch nach Einstellen und/oder Ändern der Parameter eine Rückmeldung der eingestellten bzw. geänderten Parameter auf der Anzeigeeinheit (10) der Bedieneinheit visualisiert dargestellt werden kann.

14. Bedieneinheit nach Anspruch 13, wobei die Bedieneinheit zum Konfigurieren einer Sicherheitslichtschranke bzw. eines Sicherheitslichtgitter mit einer Mehrzahl von Lichtstrahlen mit anwendungsspezifisch einzustellender Lichtintensität verwendbar ist.

15. Bedieneinheit nach Anspruch 14, wobei auf der Anzeigeeinheit (10) der Bedieneinheit die Lichtintensität für jeden Lichtstrahl des Sicherheitsgitters durch ein Balkendiagramm dynamisch in Echtzeit visualisiert dargestellt werden kann, wobei ein Balken des Balkendiagramms die Lichtintensität genau eines Lichtstrahls abbildet.

16. Bedieneinheit nach Anspruch 14 oder 15, wobei mittels der Eingabemittel der Bedieneinheit ein oder mehrere Lichtstrahlen des Sicherheitsgitters definiert ausgeblendet werden können.

17. Bedieneinheit nach einem der Ansprüche 13 bis 16, wobei mittels der Eingabemittel die eingestellten Parameter modifiziert werden können und die Modifikation instantan auf der Anzeigeeinheit (10) der Bedieneinheit visualisiert dargestellt werden kann.

18. Bedieneinheit nach Anspruch 17, wobei eine Modifikation der eingestellten Parameter über die Eingabemittel nur autorisiert erfolgen kann.

19. Bedieneinheit nach Anspruch 18, wobei die Autorisierung durch ein vorgegebenes Passwort realisiert bzw. definiert ist.

20. Bedieneinheit nach einem der Ansprüche 13 bis 19, wobei die Bedieneinheit ferner eine Speichereinheit umfasst, mittels derer die eingestellten Parameter automatisch zu vorgebbaren Zeitpunkten abgespeichert und hinterlegt werden können.

21. Bedieneinheit nach Anspruch 20, wobei durch die Speichereinheit die eingestellten Parameter periodisch abgespeichert werden können und die Periode mittels der Eingabemittel vorgegeben werden kann.

22. Bedieneinheit nach Anspruch 20 oder 21, wobei in der Speichereinheit eine Historie der eingestellten Parameter hinterlegt werden kann.

23. Bedieneinheit nach einem der Ansprüche 13 bis 22, wobei die Bedieneinheit eine Detektoreinheit umfasst, über welche eine Fehlermeldung ausgeben werden kann, sobald der Sicherheitssensor (1,100) von der Bedieneinheit entkoppelt ist.

24. Bedieneinheit nach einem der Ansprüche 13 bis 23, wobei die Bedieneinheit dazu geeignet ist, auf der Anzeigeeinheit (10) ein Framework mit mindestens einem ersten (11), einem zweiten (12) und einem dritten (13) Fenster anzuzeigen, wobei das erste Fenster (11) einen aktuellen Status der Parameter des Sicherheitssensors (1,100), das zweite Fenster (12) einen über die Eingabemittel eingebbaren einzustellenden Status der Parameter des Sicherheitssensors (1,100) und das dritte Fenster (13) eingestellte Parameter visualisiert wiedergibt.

25. Bedieneinheit nach Anspruch 24, wobei das erste Fenster (11) ausschließlich lesbar und das zweite Fenster (12) lesbar und mittels der Eingabemittel, insbesondere autorisiert, spezifischen Eingaben zugänglich ist.

26. Bedieneinheit nach einem der Ansprüche 13 bis 25, wobei die Bedieneinheit als eine computerimplementierte Bedieneinheit realisiert ist.

27. Computerprogramm mit Programmcodemitteln, um alle Schritte eines Verfahrens nach einem der Ansprüche 1 bis 12 durchzuführen, wenn das Computerprogramm auf einem Computer oder einer entsprechenden Recheneinheit, insbesondere einer Bedieneinheit nach einem der Ansprüche 13 bis 26, durchgeführt wird.

28. Computerprogrammprodukt mit Programmcodemitteln, die auf einem computerlesbaren Datenträger gespeichert sind, um alle Schritte eines Verfahrens nach einem der Ansprüche 1 bis 12 durchzuführen, wenn das Computerprogramm auf einem Computer oder einer entsprechenden Recheneinheit, insbesondere einer Bedieneinheit nach einem der Ansprüche 13 bis 26, durchgeführt wird.
